# EUROPEAN PATENT SPECIFICATION

(11) **EP 4 145 246 B1**
(45) Date of publication and mention of the grant of the patent: **27.05.2026**
(21) Application number: 22193503.4
(22) Date of filing: 01.09.2022
(51) Int. Cl.: G06F 1/16, G06F 3/00, G06F 3/01, G06F 3/03, G06F 3/04847, G06F 3/04842

(54) **A METHOD FOR ASSISTING A USER TO USE AND/OR TO EXPLORE FUNCTIONALITIES OF A HOUSEHOLD APPLIANCE BY USING AUGMENTED REALITY**
VERFAHREN ZUM UNTERSTÜTZEN EINES BENUTZERS ZUR BENUTZUNG UND/ODER ZUR EXPLORATION VON FUNKTIONALITÄTEN EINES HAUSHALTGERÄTS UNTER VERWENDUNG VON AUGMENTED REALITY
PROCÉDÉ PERMETTANT D'AIDER UN UTILISATEUR À UTILISER ET/OU EXPLORER LES FONCTIONNALITÉS D'UN APPAREIL MÉNAGER AU MOYEN DE LA RÉALITÉ AUGMENTÉE

(30) Priority: 06.09.2021 IT 202100022940
(43) Date of publication of application: 08.03.2023
(73) Proprietor: Candy S.p.A., 20861 Brugherio, Monza e Brianza (IT)
(72) Inventor: SERGI, Leonardo, I-20681 Brugherio , MONZA E BRIANZA (IT); GERETTI, Giammaria, I-20681 Brugherio, MONZA E BRIANZA (IT); MARINO, Nicola, I-20681 Brugherio, MONZA E BRIANZA (IT)
(74) Representative: Brunazzi, Stefano

(56) References cited:
- WO-A1-2020/222871
- US-A1- 2014 354 686
- US-A1- 2016 313 902
- US-A1- 2019 391 716

## Description

### TECHNOLOGICAL BACKGROUND OF THE INVENTION

### Field of application.

The present invention generally relates to the technical field of services for assisting a user to use and/or explore functionalities of a household appliance, wherein the services are accessible by means of software applications (apps) which can be executed by user devices, e.g., smartphones.

More specifically, the invention relates to methods based on electronic processing for assisting a user to use a household appliance by using augmented reality.

### Description of the prior art.

As is well known, the increasingly pervasive availability of software applications (apps) which can be executed by smartphones is increasing the set of at least partially automated functions which are accessible to the users of such devices.

Within the technical field of services for assisting the user to use and/or explore functionalities, this is reflected in the recently emerged availability of apps which allow a user to acquire information on a household appliance with augmented reality contents.

However, within this context, the needs of users continue to grow and it is increasingly more important for household appliance manufacturers to provide solutions which meet such new and increasing needs.

For example, the need is felt to allow users to acquire information on different significant parts of a household appliance, and to be guided in identifying the parts of a household appliance for which digital information capable of being provided exist, and in finding such information in the simplest and quickest manner possible through their smartphone.

The need is also felt by users to be able to interact with the household appliance in an improved and dynamic manner, even under different conditions (for example, with an oven with an open door or closed door, or with a closed or open refrigerator, or under a condition with a closed compartment and an open compartment, and so on).

There would also be significant advantages in allowing the user to access - by means of apps - digital contents not only relative to the complete household appliance, but also to specific parts of the household appliance, therefore also "specialized" on parts of a household appliance with which the user might want to interact or require information.

The known solutions briefly mentioned above do not completely meet the aforesaid important needs, which thus remain for the most part unfulfilled.

The International Patent Application WO 2020/222871 A1 describes systems and interfaces for location-based device control.

### SUMMARY OF THE INVENTION

It is the object of the present invention to provide a method for assisting a user to use and/or explore functionalities of a household appliance by using augmented reality, which allows obviating at least partially the above-mentioned drawbacks indicated with reference to the known art and meeting the above-mentioned needs particularly felt in the considered technical field. Such an object is achieved by a method according to claim 1. Further embodiments of such a method are defined in claims 2-13.

### BRIEF DESCRIPTION OF THE DRAWINGS

Further features and advantages of the methods and systems according to the invention will become apparent from the following description of preferred embodiments, given by way of indicative and non-limiting example, with reference to the accompanying Figures, in which:
- Figure 1 shows a block diagram of a method for assisting a user to explore and/or use functionalities of a household appliance, according to an embodiment of the invention;
- Figure 2 shows an example of execution of a step (acquisition of the video stream by an oven) provided in an embodiment of the aforesaid method;
- Figures 3A, 3B, 3C show respective screenshots of a user device interface, when carrying out an embodiment of the aforesaid method, in which three-dimensional augmented reality contents overlapping the digital viewing of the household appliance are shown to the user;
- Figures 3D, 3E show two examples of two-dimensional digital contents (for example, pages of a manual) which are shown to the user with reference to a selected hot-spot, when carrying out an embodiment of the aforesaid method.

### DETAILED DESCRIPTION

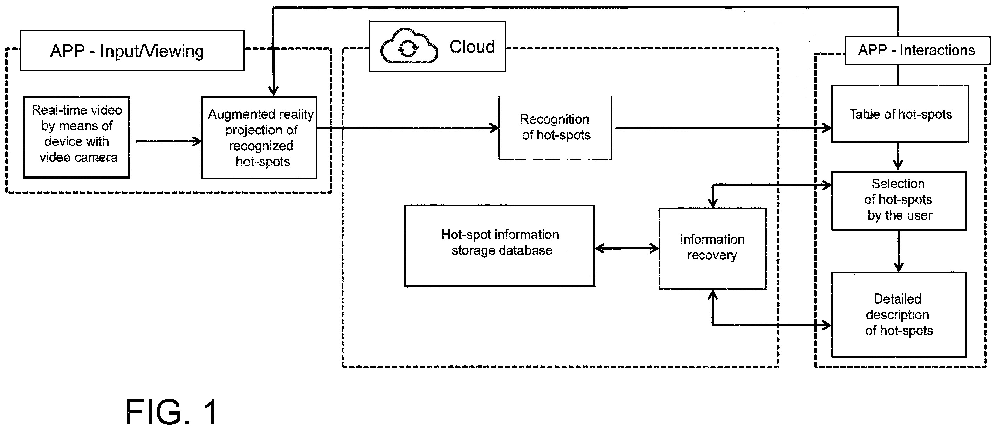

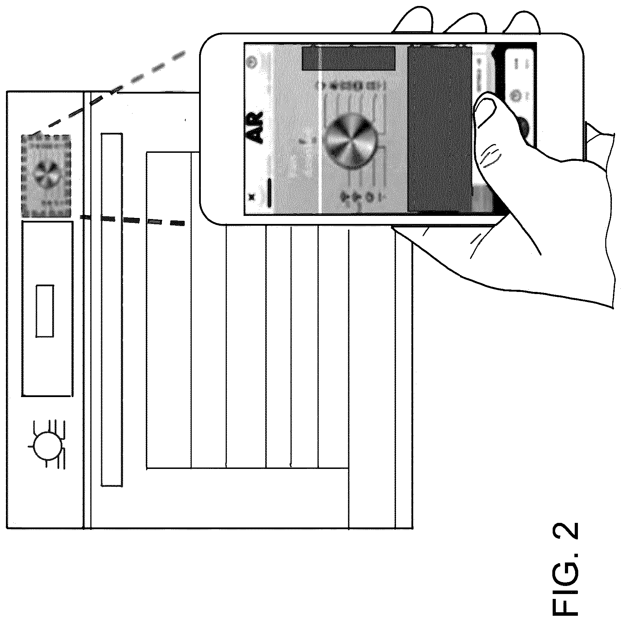

With reference to Figures 1-3, a method for assisting a user to use and/or explore functionalities of a household appliance by using augmented reality is described.

Such a method firstly comprises the steps of acquiring, by means of a user device, at least one digital video stream of the household appliance or a portion thereof, and recognizing, by electronic processing means, based on the aforesaid digital video stream, a plurality of household appliance points or parts, predetermined as significant, associated with respective stored digital information.

The aforesaid points or parts of the household appliance that are predetermined to be significant are also referred to as "hot-spots" below, a term widely used by those skilled in the art.

The method then provides highlighting the recognized significant points or parts (hot-spots) to the user by respective three-dimensional augmented reality contents overlapping and anchored (or connected) to the aforesaid hot-spots in the video images of the household appliance shown by a viewing interface of the user device during video framing by the user.

The method then comprises the steps of selecting, by the user, at least one significant point or part of interest (hot-spot) by a selection interaction (for example, a touch or other tactile interaction) on the respective three-dimensional augmented reality content, and providing the user with the stored digital information associated with the respective selected significant point or part (hot-spot) by displaying (e.g., projecting) the aforesaid stored digital information onto the viewing interface of the user device.

According to the widely implemented technical definition understood by those skilled in the art, the definition of "augmented reality" in this description generally indicates the possibility of showing three-dimensional digital content overlapping and integrated with a framed digital image so as to keep such a three-dimensional digital content "virtually" in the same position in space even during a change of the frame and/or upon frame changes.

According to an embodiment of the method, the step of acquiring comprises acquiring a digital video stream of the household appliance framed by the user in real time, and sending the digital video stream acquired by the user device to remote electronic processing means adapted to perform the recognition step.

According to an embodiment of the method, the step of recognizing comprises recognizing the plurality of significant points or parts or hot-spots of the household appliance based on visual recognition procedures and/or algorithms applied to the images taken from the aforesaid digital video stream.

According to an implementation option, the aforesaid step of highlighting comprises the sub-step of analyzing the images of the video stream to identify the plurality of recognized significant points or parts (hot-spots) in the images of the household appliance, and further comprises the sub-step of associating the three-dimensional augmented reality contents with the respective significant points or parts (hot-spots) so that such three-dimensional augmented reality contents then remain anchored to the time evolution of the image of the household appliance in the video stream taken by the user.

According to an implementation option, the aforesaid association sub-step is performed by augmented reality management software.

According to an implementation option, the aforesaid association sub-step is performed by the user device, in which said augmented reality management software is stored and can be executed.

According to an implementation option, the aforesaid step of associating comprises placing the hot-spot in a three-dimensional reference coordinate system which is projected according to the planes recognized by the augmented reality management software.

According to various possible embodiments of the method, the aforesaid visual recognition procedures and/or algorithms applied to the images taken from the digital video stream, and/or the aforesaid sub-steps of analyzing the images of the video stream and associating the three-dimensional augmented reality contents with the respective significant points or parts, are carried out by one or more video/image analysis algorithms based on artificial intelligence techniques and/or trained algorithms and/or machine learning.

According to an implementation option, the aforesaid artificial intelligence techniques and/or trained algorithms and/or machine learning comprise trained deep neural networks.

Some further examples of the artificial intelligence techniques and/or trained algorithms and/or machine learning which can be used in the method of the present invention for the purposes indicated above will be shown hereinbelow by way of non-limiting example.

Such neural networks for detecting objects are trained on several million images of different objects and then their weights are refined to better adapt to the purpose of the particular project.

Such a refinement is said to be "supervised" because a cost function is used in order to define the best configuration of the parameters, the cost function representing, in numeric manner, the difference between the prediction generated by the network and the true value (referred to as a label) input into the optimization algorithm.

According to an implementation option of the present method, a network trained on a group of images divided into 80 classes was refined to allow identifying as classes the details of the household appliance being analyzed; such an operation is repeated for several household appliances, thus obtaining specialized algorithms for each household appliance (or groups of household appliances).

The classification is not the only output produced by an object detection algorithm: indeed, the main output consists of the coordinates in the image in which the detected object is present.

Therefore, the difference between the prediction and label is to be intended as the weighted sum of the errors from the classification and those from the erroneous estimation of the coordinates of the object. Usually, the coordinates are intended as vertexes of a rectangle, but it is possible for the output by the network to be only the centroid of the detected object.

It should be noted that, according to other possible implementation options of the method, other trained algorithms can be employed, with other training procedures, which in themselves are known.

According to a further embodiment, the method further comprises the step of associating the recognized significant point or part (hot-spot) with a respective household appliance.

According to various possible implementation variants, such an association step is carried out based on known product identification information, or based on information about the household appliance received from the user, or based on a procedure of visual recognition of the household appliance.

According to an implementation option, the recognition step also comprises recognizing the household appliance framed in the digital video stream.

According to another embodiment of the method, the stored digital information associated with the respective significant point or part (hot-spot) comprises:
- a summary description of the hot-spot and/or
- hypertext content comprising video and/or audio and/or multi-page text contents.

According to an implementation option in which the digital information comprises interactive contents, the method comprises the following further steps of utilizing the augmented reality content by the user:
- in response to a first touch for selecting virtual reality content, providing the user with a summary description, or bi-dimensional content, of the hot-spot, overlapping the image shown by the visual interface of the user device;
- in response to a second action for selecting interactive two-dimensional content, providing the user with hypertext video and/or audio and/or multi-page text information overlapping the image shown by the visual interface of the user device.

According to an implementation option, the aforesaid digital information or interactive contents comprise access to remote control and/or telecontrol functions of the household appliance which are manageable by means of apps and smartphones.

According to an implementation option, the aforesaid digital information or interactive contents comprise an electronic version of the complete user manual of the household appliance.

According to an implementation example, each hot-spot is associated with the page or the pages (displayable as described above) of the manual relative to the part of household appliance associated with the hot-spot.

According to another implementation option, the aforesaid digital information or interactive contents comprise access to "e-commerce" functions for purchasing products or consumables and/or accessories by means of apps and smartphones.

**It** is easy to understand that the method described above can be applied to any household appliance (for example, oven or refrigerator or cooktop or washing machine or other household appliance), in any condition (for example, open or closed).

According to various possible implementation options, various parts of household appliance are associated with a hot-spot, as provided by the method, and comprise, for example: internal parts or external parts of the household appliance; doors or handles; other mechanical, movable or fixed parts; buttons or control knobs; sensors or warning lights; auxiliary operating apparatuses (lighting, power supply, etc.), and so on.

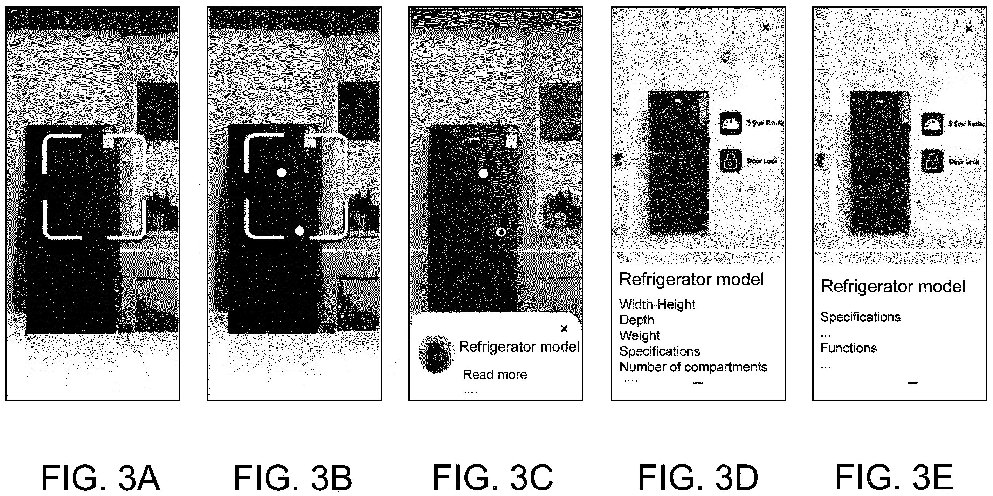

By way of mere example, Figure 3 shows what the user sees when performing a method according to an embodiment of the invention.

Figure 3A shows the acquisition of a video image of a household appliance (a refrigerator in this example).

Figure 3B shows how the method provides overlapping the image of the refrigerator with three-dimensional augmented reality contents (represented by white circles) overlapping and connected to some (two in the example shown) hot-spots of the household appliance, which allow immediately highlighting such hot-spots to the user.

Figure 3C shows the situation in which a hot-spot was selected by the user (white circle filled in dark): in this case, the user is presented with an interactive window (at the bottom) through which the user can download and view two-dimensional digital information associated with the selected hot-spot.

Figures 3D and 3E show the view of the digital contents associated with the hot-spot, in the specific example, two pages of the electronic version of the user manual, through which the user can navigate.

A system according to the present invention configured to perform the aforesaid method is now described.

Such a system comprises at least one user device and remote processing means operatively connected to the user device by means of a telecommunications network.

According to an embodiment of the system, the user device is a smartphone provided with a camera, an interface (for example, a touch interface) and a local processor, where a software application (app) is stored. Such a software app is configured to carry out the aforesaid steps of acquiring at least one digital video stream of the household appliance or of a portion thereof, highlighting significant points or parts on the screen of the user device by means of respective three-dimensional augmented reality contents, providing the user with digital contents associated with the hot-spot selected by the user.

According to an embodiment of the system, the aforesaid remote processing means are processing means in a cloud comprising hardware and software configured to carry out the aforesaid step of recognizing, based on the acquired digital video stream, a plurality of household appliance points or parts predetermined as significant, i.e., hot-spots, associated with respective stored digital information.

**It** is worth noting that the object of the present invention is fully achieved by the method and system disclosed above by virtue of the functional and structural features thereof.

Indeed, the above-disclosed method allows a user to interact with the household appliance in an efficient and dynamic manner under different possible conditions of the household appliance itself.

Moreover, the method allows the user to be guided in identifying the parts of a household appliance for which digital information capable of being provided exist, and in finding such information. Thereby, the user can advantageously access digital contents not only relative to the complete household appliance, but also to specific parts of the household appliance.

The three-dimensional augmented reality overlapping the video image of the household appliance allows the user to view the hot-spots on the household appliance, which remain "anchored/connected" to the image while the video frame continues and changes.

Based on this, the user can easily select one or more specific hot-spots of interest in a targeted manner.

Therefore, once a hot-spot of interest is selected, the method allows the user to easily view digital information associated with the hot-spot which can be of the most varied type, up to comprising, for example, the most specific chapter with reference to the description of the hot-spot, of the electronic version of the user manual, with apparent advantages in terms of exploring functionalities and using the household appliance.

Each of the features described as belonging to a possible embodiment can be achieved irrespective of the other embodiments described.

## Claims

1. A method for assisting a user to explore functionalities and/or to use a household appliance by using augmented reality, comprising:
- acquiring at least one digital video stream of the household appliance or a portion thereof by means of a user device;
- recognizing, by electronic processing means, based on said digital video stream, a plurality of household appliance points or household appliance parts, predetermined as significant, i.e., hot-spots, associated with respective stored digital information;
- highlighting the recognized significant points or parts to the user by means of respective three-dimensional augmented reality contents overlapping and anchored to said significant points or parts in the video images of the household appliance shown by a viewing interface of the user device during video framing by the user;
- selecting, by the user, at least one significant point or part of interest by a selection interaction on the respective three-dimensional augmented reality content;
- providing the user with the stored digital information associated with the respective selected significant point or part, by projecting or displaying said stored digital information onto the viewing interface of the user device,
wherein said stored digital information comprises information adapted to assist a user to explore functionalities and/or to use a household appliance,
wherein said step of recognizing also comprises visually recognizing the household appliance framed in the digital video stream,
and wherein the method further comprises the step of associating the recognized significant point or part with a respective model of household appliance, wherein said step of associating is carried out based on said visual recognition of the household appliance and moreover based on known product identification information, or based on information about the household appliance received from the user.

2. A method according to claim 1, wherein the step of acquiring comprises:
- acquiring, by the user, a digital video stream of the household appliance framed in real time;
- sending the digital video stream acquired by the user device to remote electronic processing means adapted to perform the recognition step.

3. A method according to claim 1 or claim 2, wherein the step of recognizing comprises recognizing the plurality of significant points or parts of the household appliance based on visual recognition procedures and/or algorithms applied to the images taken from said digital video stream.

4. A method according to any one of the preceding claims, wherein said step of highlighting comprises:
- analyzing the images of the video stream to identify the plurality of recognized significant points or parts in the images of the household appliance;
- associating the three-dimensional augmented reality contents with the respective significant points or parts so that said three-dimensional augmented reality contents then remains anchored to the time evolution of the image of the household appliance in the video stream taken by the user, wherein said association step is carried out by augmented reality management software.

5. A method according to claim 4, wherein said step of associating is performed by the user device, where said augmented reality management software is stored and can be executed.

6. A method according to claim 4 or claim 5, wherein said step of associating the three-dimensional augmented reality contents with the respective significant points or parts, i.e., hot-spots, comprises:
- placing the hot-spot in a three-dimensional reference coordinate system which is projected according to the planes recognized by the augmented reality management software.

7. A method according to any one of claims 3-6, wherein the aforesaid visual recognition procedures and/or algorithms applied to the images taken from said digital video stream, and/or the aforesaid sub-steps of analyzing the images of the video stream and associating the three-dimensional augmented reality contents with the respective significant points or parts are carried out by one or more video/image analysis algorithms based on artificial intelligence techniques and/or trained algorithms and/or machine learning.

8. A method according to claim 7, wherein the aforesaid artificial intelligence techniques and/or trained algorithms and/or machine learning comprise trained deep neural networks.

9. A method according to any one of the preceding claims, wherein the stored digital information associated with the respective significant point or part comprises:
- a summary description of the hot-spot and/or
- hypertext content comprising video and/or audio and/or multi-page text contents and/or
- instructions for use or maintenance of the household appliance, and/or
- an electronic version of the user manual of the household appliance

10. A method according to claim 9, wherein the digital information comprises interactive contents, and wherein the method comprises the following further steps of utilizing the augmented reality content by the user:
- in response to a first touch for selecting virtual reality content, providing the user with a summary description, or bi-dimensional content, of the hot-spot, overlapping the image shown by the visual interface of the user device;
- in response to a second action for selecting interactive two-dimensional content, providing the user with hypertext video and/or audio and/or multi-page text information overlapping the image shown by the visual interface of the user device.

11. A method according to any one of the preceding claims, wherein said digital information or interactive contents comprise access to remote control and/or telecontrol functions of the household appliance which are manageable by means of apps and smartphones.

12. A method according to any one of the preceding claims, wherein said digital information or interactive contents comprise access to e-commerce functions for purchasing consumables and/or accessories by means of apps and smartphones.

## Patentansprüche

1. Verfahren zum Unterstützen eines Benutzers zur Exploration von Funktionalitäten und/oder zur Benutzung eines Haushaltsgeräts unter Verwendung von Augmented Reality, umfassend:
- Erfassen mindestens eines digitalen Videostreams des Haushaltsgeräts oder eines Abschnitts davon mittels einer Benutzervorrichtung;
- Erkennen einer Vielzahl von Punkten des Haushaltsgeräts oder Teilen des Haushaltsgeräts, die als wichtig vorbestimmt sind, d. h. Hotspots, die mit entsprechenden gespeicherten digitalen Informationen verknüpft sind, durch elektronische Verarbeitungsmittel auf der Grundlage des digitalen Videostreams;
- Hervorheben der erkannten wichtigen Punkte oder Teile für den Benutzer mittels entsprechender dreidimensionaler Augmented-Reality-Inhalte, die sich mit den wichtigen Punkten oder Teilen in den Videobildern des Haushaltsgeräts überlagern und an diesen verankert sind und von einer Anzeigeoberfläche der Benutzervorrichtung während der Videoaufnahme durch den Benutzer dargestellt werden;
- Auswählen mindestens eines wichtigen Punktes oder Teils von Interesse durch den Benutzer mittels einer Auswahlinteraktion auf dem entsprechenden dreidimensionalen Augmented-Reality-Inhalt;
- Bereitstellen der gespeicherten digitalen Informationen, die mit dem entsprechenden ausgewählten wichtigen Punkt oder Teil verknüpft sind, für den Benutzer durch Projizieren oder Anzeigen der gespeicherten digitalen Informationen auf der Anzeigeoberfläche der Benutzervorrichtung,
wobei die gespeicherten digitalen Informationen Informationen umfassen, die dazu ausgelegt sind, einen Benutzer bei der Exploration von Funktionalitäten und/oder der Benutzung eines Haushaltsgeräts zu unterstützen,
wobei der Schritt des Erkennens auch das visuelle Erkennen des im digitalen Videostream dargestellten Haushaltsgeräts umfasst,
und wobei das Verfahren ferner den Schritt des Verknüpfens des erkannten wichtigen Punkts oder Teils mit einem entsprechenden Modell eines Haushaltsgeräts umfasst, wobei der Schritt des Verknüpfens auf der Grundlage der visuellen Erkennung des Haushaltsgeräts und darüber hinaus auf der Grundlage bekannter Produktidentifikationsinformationen oder auf der Grundlage von Informationen über das Haushaltsgerät, die vom Benutzer empfangen wurden, durchgeführt wird.

2. Verfahren nach Anspruch 1, wobei der Schritt des Erfassens umfasst:
- Erfassen eines digitalen Videostreams des in Echtzeit dargestellten Haushaltsgeräts durch den Benutzer;
- Senden des von der Benutzervorrichtung erfassten digitalen Videostreams an entfernte elektronische Verarbeitungsmittel, die zur Durchführung des Erkennungsschritts ausgelegt sind.

3. Verfahren nach Anspruch 1 oder Anspruch 2, wobei der Schritt des Erkennens das Erkennen der Vielzahl von wichtigen Punkten oder Teilen des Haushaltsgeräts auf der Grundlage visueller Erkennungsverfahren und/oder Algorithmen umfasst, die auf die aus dem digitalen Videostream herangezogenen Bilder angewendet werden.

4. Verfahren nach einem der vorhergehenden Ansprüche, wobei der Schritt des Hervorhebens umfasst:
- Analysieren der Bilder des Videostreams, um die Vielzahl der erkannten wichtigen Punkte oder Teile in den Bildern des Haushaltsgeräts zu identifizieren;
- Verknüpfen der dreidimensionalen Augmented-Reality-Inhalte mit den entsprechenden wichtigen Punkten oder Teilen, so dass die dreidimensionalen Augmented-Reality-Inhalte anschließend an der zeitlichen Entwicklung des Bildes des Haushaltsgeräts in dem von dem Benutzer aufgenommenen Videostream verankert bleiben, wobei der Verknüpfungsschritt durch eine Augmented-Reality-Verwaltungssoftware durchgeführt wird.

5. Verfahren nach Anspruch 4, wobei der Schritt des Verknüpfens durch die Benutzervorrichtung durchgeführt wird, auf der die Augmented-Reality-Verwaltungssoftware gespeichert ist und ausgeführt werden kann.

6. Verfahren nach Anspruch 4 oder Anspruch 5, wobei der Schritt des Verknüpfens der dreidimensionalen Augmented-Reality-Inhalte mit den entsprechenden wichtigen Punkten oder Teilen, d. h. Hotspots, umfasst:
- Platzieren des Hotspots in einem dreidimensionalen Referenzkoordinatensystem, das entsprechend den von der Augmented-Reality-Verwaltungssoftware erkannten Ebenen projiziert wird.

7. Verfahren nach einem der Ansprüche 3-6, wobei die vorgenannten visuellen Erkennungsverfahren und/oder Algorithmen, die auf die aus dem digitalen Videostream herangezogenen Bilder angewendet werden, und/oder die vorgenannten Teilschritte des Analysierens der Bilder des Videostreams und des Verknüpfens der dreidimensionalen Augmented-Reality-Inhalte mit den entsprechenden wichtigen Punkten oder Teilen durch einen oder mehrere Video-/Bildanalysealgorithmen auf der Grundlage von Techniken der künstlichen Intelligenz und/oder trainierten Algorithmen und/oder maschinellem Lernen durchgeführt werden.

8. Verfahren nach Anspruch 7, wobei die vorgenannten Techniken der künstlichen Intelligenz und/oder trainierten Algorithmen und/oder maschinellen Lernens trainierte tiefe neuronale Netze umfassen.

9. Verfahren nach einem der vorhergehenden Ansprüche, wobei die gespeicherten digitalen Informationen, die mit dem entsprechenden wichtigen Punkt oder Teil verknüpft sind, umfassen:
- eine zusammenfassende Beschreibung des Hotspots und/oder
- Hypertext-Inhalte, die Video- und/oder Audio- und/oder mehrseitige Textinhalte umfassen, und/oder
- Anweisungen zur Benutzung oder Wartung des Haushaltsgeräts und/oder
- eine elektronische Version der Bedienungsanleitung des Haushaltsgeräts.

10. Verfahren nach Anspruch 9, wobei die digitalen Informationen interaktive Inhalte umfassen und wobei das Verfahren die folgenden weiteren Schritte zur Nutzung der Augmented-Reality-Inhalte durch den Benutzer umfasst:
- als Reaktion auf eine erste Berührung zur Auswahl von Virtual-Reality-Inhalten, Bereitstellen einer zusammenfassenden Beschreibung oder zweidimensionaler Inhalte des Hotspots für den Benutzer, die das von der Anzeigeoberfläche der Benutzervorrichtung angezeigte Bild überlagern;
- als Reaktion auf eine zweite Handlung zur Auswahl interaktiver zweidimensionaler Inhalte, Bereitstellen von Hypertext-, Video- und/oder Audio- und/oder mehrseitiger Textinformationen für den Benutzer, die das von der Anzeigeoberfläche der Benutzervorrichtung angezeigte Bild überlagern.

11. Verfahren nach einem der vorhergehenden Ansprüche, wobei die digitalen Informationen oder interaktiven Inhalte den Zugriff auf Fernbedienungs- und/oder Fernsteuerungsfunktionen des Haushaltsgeräts umfassen, die mittels Apps und Smartphones verwaltet werden können.

12. Verfahren nach einem der vorhergehenden Ansprüche, wobei die digitalen Informationen oder interaktiven Inhalte den Zugriff auf E-Commerce-Funktionen zum Kauf von Verbrauchsmaterialien und/oder Zubehör mittels Apps und Smartphones umfassen.

## Revendications

1. Procédé pour aider un utilisateur à explorer des fonctionnalités et/ou à utiliser un appareil électroménager en utilisant la réalité augmentée, comprenant :
- acquérir au moins un flux vidéo numérique de l'appareil électroménager ou d'une partie de celui-ci au moyen d'un dispositif utilisateur ;
- reconnaître, par des moyens de traitement électroniques, sur la base dudit flux vidéo numérique, une pluralité de points d'appareil électroménager ou de parties d'appareil électroménager, prédéterminés comme significatifs, c'est-à-dire des points chauds, associés à des informations numériques stockées respectives ;
- mettre en évidence les points ou parties significatifs reconnus à l'utilisateur au moyen de contenus de réalité augmentée en trois dimensions respectifs se chevauchant et ancrés auxdits points ou parties significatifs dans les images vidéo de l'appareil électroménager montrées par une interface de visualisation du dispositif utilisateur pendant le cadrage vidéo par l'utilisateur ;
- sélectionner, par l'utilisateur, au moins un point ou partie d'intérêt significatif par une interaction de sélection sur le contenu de réalité augmentée en trois dimensions respectif ;
- fournir à l'utilisateur les informations numériques stockées associées au point ou partie significatif sélectionné respectif, en projetant ou en affichant lesdites informations numériques stockées sur l'interface de visualisation du dispositif utilisateur,
dans lequel lesdites informations numériques stockées comprennent des informations adaptées pour aider un utilisateur à explorer des fonctionnalités et/ou à utiliser un appareil électroménager,
dans lequel ladite étape de reconnaissance comprend également la reconnaissance visuelle de l'appareil électroménager encadré dans le flux vidéo numérique,
et dans lequel le procédé comprend en outre l'étape consistant à associer le point ou partie significatif reconnu à un modèle respectif d'appareil électroménager, ladite étape d'association étant réalisée sur la base de ladite reconnaissance visuelle de l'appareil électroménager et en outre sur la base d'informations d'identification de produit connues, ou sur la base d'informations concernant l'appareil électroménager reçues de l'utilisateur.

2. Procédé selon la revendication 1, dans lequel l'étape d'acquisition comprend :
- acquérir, par l'utilisateur, un flux vidéo numérique de l'appareil électroménager encadré en temps réel ;
- envoyer le flux vidéo numérique acquis par le dispositif utilisateur à des moyens électroniques de traitement à distance adaptés pour réaliser l'étape de reconnaissance.

3. Procédé selon la revendication 1 ou la revendication 2, dans lequel l'étape de reconnaissance comprend la reconnaissance de la pluralité de points ou parties significatifs de l'appareil électroménager sur la base de procédures de reconnaissance visuelle et/ou d'algorithmes appliqués aux images prises à partir dudit flux vidéo numérique.

4. Procédé selon l'une quelconque des revendications précédentes, dans lequel ladite étape de mise en évidence comprend :
- analyser les images du flux vidéo pour identifier la pluralité de points ou parties significatifs reconnus dans les images de l'appareil électroménager ;
- associer les contenus de réalité augmentée en trois dimensions aux points ou parties significatifs respectifs de sorte que lesdits contenus de réalité augmentée en trois dimensions restent ensuite ancrés à l'évolution temporelle de l'image de l'appareil électroménager dans le flux vidéo pris par l'utilisateur, dans lequel ladite étape d'association est réalisée par un logiciel de gestion de réalité augmentée.

5. Procédé selon la revendication 4, dans lequel ladite étape d'association est réalisée par le dispositif utilisateur, où ledit logiciel de gestion de réalité augmentée est stocké et peut être exécuté.

6. Procédé selon la revendication 4 ou la revendication 5, dans lequel ladite étape d'association des contenus de réalité augmentée en trois dimensions avec les points ou parties significatifs respectifs, c'est-à-dire les points chauds, comprend :
- placer le point chaud dans un système de coordonnées de référence tridimensionnel qui est projeté selon les plans reconnus par le logiciel de gestion de la réalité augmentée.

7. Procédé selon l'une quelconque des revendications 3 à 6, dans lequel les procédures et/ou algorithmes de reconnaissance visuelle susmentionnés appliqués aux images prises à partir dudit flux vidéo numérique, et/ou les sous-étapes susmentionnées d'analyse des images du flux vidéo et d'association des contenus de réalité augmentée en trois dimensions aux points ou parties significatifs respectifs sont mis en oeuvre par un ou plusieurs algorithmes d'analyse de vidéo/image basés sur des techniques d'intelligence artificielle et/ou des algorithmes entraînés et/ou un apprentissage automatique.

8. Procédé selon la revendication 7, dans lequel les techniques d'intelligence artificielle susmentionnées et/ou les algorithmes entraînés et/ou l'apprentissage automatique comprennent des réseaux neuronaux profonds entraînés.

9. Procédé selon l'une quelconque des revendications précédentes, dans lequel les informations numériques stockées associées au point ou partie significatif respectif comprennent :
- une description sommaire du point chaud, et/ou
- un contenu hypertexte comprenant des contenus textuels vidéo et/ou audio et/ou multi-pages, et/ou
- des instructions d'utilisation ou d'entretien de l'appareil électroménager, et/ou
- une version électronique du manuel d'utilisation de l'appareil électroménager.

10. Procédé selon la revendication 9, dans lequel les informations numériques comprennent des contenus interactifs, le procédé comprenant les étapes supplémentaires suivantes d'utilisation du contenu de réalité augmentée par l'utilisateur
- en réponse à un premier toucher pour sélectionner un contenu de réalité virtuelle, fournir à l'utilisateur une description sommaire, ou un contenu bidimensionnel, du point chaud, chevauchant l'image affichée par l'interface visuelle du dispositif utilisateur ;
- en réponse à une deuxième action de sélection de contenu bidimensionnel interactif, fournir à l'utilisateur des informations de texte hypertexte vidéo et/ou audio et/ou multi-pages chevauchant l'image affichée par l'interface visuelle du dispositif utilisateur.

11. Procédé selon l'une quelconque des revendications précédentes, dans lequel lesdites informations numériques ou contenus interactifs comprennent l'accès à des fonctions de télécommande et/ou de télécommande de l'appareil électroménager qui sont gérables au moyen d'applications et de smartphones.

12. Procédé selon l'une quelconque des revendications précédentes, dans lequel lesdites informations numériques ou contenus interactifs comprennent l'accès à des fonctions de commerce électronique pour l'achat de consommables et/ou d'accessoires au moyen d'applications et de smartphones.
